# EUROPÄISCHE PATENTANMELDUNG

(11) **EP 2 873 964 A1**
(43) Veröffentlichungstag der Anmeldung: **20.05.2015**
(21) Anmeldenummer: 14190017.5
(22) Anmeldetag: 23.10.2014
(51) Int. Cl.: G01N 21/47

(54) **Kalibrierelement für Streulichtmessgerät**

(30) Priorität: 13.11.2013 AT 507562013
(71) Anmelder: AVL DiTest GmbH, 8020 Graz (DE)
(72) Erfinder: Lukesch, Walter, 8041 Graz (AT); Axmann, Harald, 8501 Lieboch (AT); Bergmann, Alexander, 8052 Graz (AT)
(74) Vertreter: Patentanwälte Pinter & Weiss OG

(57) **Zusammenfassung**

Ein einfach herstellbares Kalibrierelement, das eine exakte, definierte Lichtverteilung erzeugt, die zur Kalibrierung verwendet werden kann, ist als optisches Beugungselement (30), das durch Bestrahlung mit einem Lichtstrahl (25) ein definiertes Interferenzmuster (40) erzeugt, ausgeführt.

## Beschreibung

Die gegenständliche Erfindung betrifft ein Kalibrierelement, vorzugsweise für ein Streulichtmessgerät.

Zur Messung von Partikeln in Abgasen wurden bisher hauptsächlich Geräte basierend auf dem Durchlichtverfahren, sogenannten Opazimeter, eingesetzt. Neuerdings kommen auch Geräte, die ein Streulichtverfahren verwenden, zum Einsatz. Beim Streulichtverfahren wird das Abgas durch ein Messvolumen geleitet, in das Licht, z.B. Laserlicht, eingestrahlt wird. Das Licht wird an den Partikeln gestreut und das gestreute Licht wird von einer Anzahl von in vorgegebener und, in der Regel, fixer Position angeordneten Sensoren erfasst. Die erfasste Streulichtintensität ist ein Maß für die Partikelmassenkonzentration im Abgas.

Damit ein solches Messverfahren eingesetzt werden kann, muss das Streulichtmessgerät kalibriert werden, um eine ordnungsgemäße Funktion, also eine richtige Messung, sicherzustellen. Dazu werden in der Regel definierte Streukörper verwendet. Eine Möglichkeit zur Realisierung solcher Streukörper besteht darin, ein flüssiges Trägermaterial mit Feststoffpartikeln zu mischen, sodass die Feststoffpartikel möglichst gleichmäßig und homogen im Trägermaterial verteilt sind. Danach wird das flüssige Trägermaterial ausgehärtet, um die Feststoffpartikel in Ihrer Lage zu fixieren und um eine definierte Streuung am Streukörper zu erzeugen. Solche Streukörper sind z.B. aus der US 3,234,846 A, der US 4,291,981 A oder der EP 658 264 B1 bekannt.

Aus der DE 10 2010 002 423 A1 ist eine Vorrichtung und ein Verfahren zur Kalibrieren eines Streulichtmessgerätes offenbart, in der ein quaderförmiges Kalibrierelement verwendet wird, das einen Streukörper aus in einem festen Trägermaterial eingebetteten Streuzentren aufweist. Die Streuzentren weisen eine definierte Größenverteilung und einen definierten Abstand zueinander auf, dies ermöglicht eine homogene Verteilung und Intensität des davon erzeugten Streulichtes. Weiters beschreibt die DE 10 2010 002 423 A1 einen Absorber in Form einer getönte Schicht, die am Lichteintritt und/oder am Lichtaustritt angeordnet werden kann, um eine Dämpfungswirkung zu erzielen und eine gewünschte Streulichtintensität einzustellen. Zwischen Streukörper und getönter Schicht gibt es dadurch am Lichtaustritt eine ebene Grenzschicht, an der es zur Brechung des Streulichtes kommt. Die Dämpfungswirkung eines Absorbers hängt aber vom Weg ab, den das Licht im Absorber zurücklegt. Je länger der Weg, umso stärker wird das Licht gedämpft. Aufgrund der Brechung und der Dämpfungswirkung ist die Streulichtverteilung am Lichtaustritt aus dem Streukörper nicht homogen verteilt. Das Messergebnis ist damit abhängig von der relativen Position der Sensoren zum Streukörper, was das Kalibrierelement auch empfindlich auf Lageungenauigkeiten von Streukörper und/oder Sensoren macht.

Die EP 2 600 139 A1 zeigt ein Kalibrierelement mit einem zylindrischen, festen Streukörper mit eingebetteten Streuzentren, der von einem zylindrischen Absorberkörper konzentrisch umgeben wird. Damit soll eine möglichst isotrope Streulichtverteilung erzielt werden. Die Streuzentren sind im festen Streukörper ortsfest eingebettet, weshalb immer die gleichen Streuzentren im Streukörper beleuchtet werden. Eine allfällige Inhomogenität der Streuzentren im Streukörper, sei es in der Verteilung oder Größe der Streuzentren, macht sich dabei als störende Abweichung in der resultierenden Streulichtverteilung, z.B. als Streulichtkonzentration, bemerkbar, was insbesondere bei der Kalibrierung unerwünscht ist.

Generell hängen bei solchen Kalibrierelementen die erzeugte Streulichtverteilung und die Genauigkeit der Kalibrierung von den Eigenschaften des Streukörpers und der darin enthaltenen Streuzentren, sowie von der Verteilung der Streuzentren im Streukörper ab. Fertigungstechnisch unterliegen die Streuzentren aber gewissen Toleranzen in Größe und Form. Ebenso ist die Homogenität der Streuzentren im Streukörper fertigungstechnisch beschränkt. In beiden Fällen erhöht sich aber der fertigungstechnische Aufwand, je höher die Qualität des Kalibrierelements sein soll.

Es ist daher eine Aufgabe der gegenständlichen Erfindung, ein einfach herstellbares Kalibrierelement anzugeben, das eine exakte, definierte Lichtverteilung erzeugt, die zur Kalibrierung verwendet werden kann.

Diese Aufgabe wird erfindungsgemäß durch ein Kalibrierelement mit einem optischen Beugungselement, das durch Bestrahlung mit einem Lichtstrahl ein bekanntes, definiertes Interferenzmuster erzeugt, gelöst. Optische Beugungselemente sind sehr einfach, in hoher Präzision und Qualität herstellbare bzw. verfügbare optische Elemente. Darüber hinaus erzeugen solche optischen Elemente bei Bestrahlung mit Licht genau definierte und vor allem im Vorfeld bekannte Interferenzmuster, die auf einfache Weise zur Kalibrierung herangezogen werden können. Außerdem kann bei der Verwendung von optischen Elementen auch auf bei anderen Kalibrierelementen eventuell notwendigen Absorbern zur Einstellung der Lichtintensität verzichtet werden.

Vorzugsweise ist das optische Beugungselement als optischer Standardbauteil, wie als Beugungsgitter, als diffraktives optisches Element oder als Blende oder Blendensystem, ausgeführt.

Die gegenständliche Erfindung wird nachfolgend unter Bezugnahme auf die Figuren 1 bis 4, die beispielhaft und schematisch vorteilhafte Ausgestaltungen der Erfindung zeigen, erläutert. Dabei zeigt
Fig. 1 ein Streulichtmessgerät in einer Seitenansicht,
Fig. 2 ein Streulichtmessgerät mit Kalibrierelement in einer Querschnittsebene,
Fig. 3 ein erfindungsgemäßes Kalibrierelement und
Fig.4 ein mit einem erfindungsgemäßen Kalibrierelement erzeugtes Interferenzmuster.

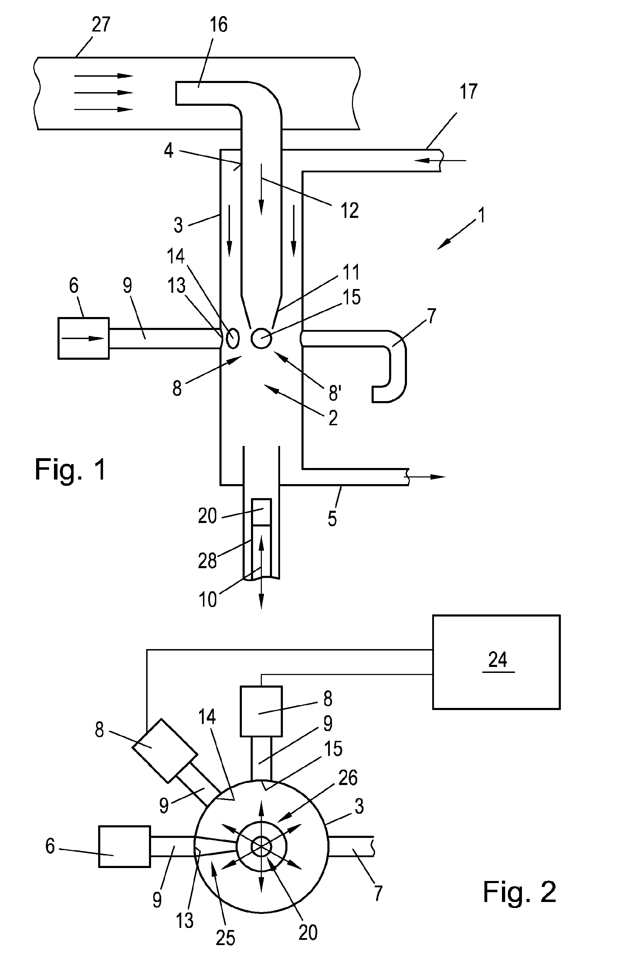

Das in Fig. 1 und 2 dargestellte Streulichtmessgerät 1 ist beispielsweise zur kontinuierlichen Messung der Partikelkonzentration im Abgas von Brennkraftmaschinen geeignet, wobei dieses Abgas über eine Sonde 16, beispielsweise im Auspuff 27 am Auspuffende der Brennkraftmaschine, entnommen und dem Streulichtmessgerät 1 über eine Zuleitung 4 als Messgas 12 zugeführt werden kann. Das Streulichtmessgerät 1 besteht im Wesentlichen aus einer ein Messvolumen 2 umgebenden Messkammer 3, welche eine Zuleitung 4 und Ableitung 5 für das partikelbeladene Messgas 12 zum bzw. vom Messvolumen 2 und eine Lichtquelle 6, wie z.B. einen Laser, mit zugehöriger, im Strahlweg gegenüberliegender Lichtsenke 7 aufweist. Weiters ist zumindest eine Detektoranordnung 8 angeordnet, die das aufgrund der Partikel im Messgas 12 erzeugte Streulicht 26 in der Ebene des Lichtstrahls 25, bzw. in einer Querschnittsebene der Messkammer 3, erfasst. Ebenso können in gleicher Weise um beliebige Winkel versetzt noch weitere Detektoranordnungen 8' angeordnet sein, wie in Fig. 2 besser ersichtlich. D.h., dass die Detetektoranordnung 8 bzw. 8', oder zumindest die optischen Fenster 14, 15 in der Messzelle 3, bevorzugt in der Ebene des Lichtstrahls 25, bzw. in einer Querschnittsebene der Messkammer 3, angeordnet sind. Die Lichtquelle 6 und/oder die Detektoranordnung 8, 8' kann auch direkt an der Messkammer 3 angeordnet sein und nicht wie hier dargestellt in Abstand dazu. Die optischen Fenster 13, 14 und 15 können dazu als Linsenoptikvorsätze am Ende von Lichtleitern 9 ausgebildet sein, welche Lichtquelle 6 und Detektoranordnung 8, 8' mit den optischen Fenstern 13, 14, 15 verbinden, was Temperaturein- bzw. -austrag verhindert.

Das von den Detektoranordnungen 8, 8' erzeugte Messsignal wird an eine Auswerteeinrichtung 24 weitergeleitet, die aus den Messsignalen in an sich bekannter Weise eine Partikelmassenkonzentration im Messgas 12 ermittelt.

Über eine Leitung 17 kann der Messzelle 3 auch Spülgas, z.B. gefiltertes Abgas oder gefilterte Luft, zugeführt werden, wobei das Spülgas das Messvolumen 2 bzw. das Messgas 12 in der Messzelle 3 umgibt. Das Spülgas strömt hier zwischen Messgas 12 und der Wand der Messzelle 3. Damit kann verhindert werden, dass partikelbeladenes Messgas 12 mit den optischen Elementen (Lichtleiter 9, optische Fenster 13, 14, 15) in der Messzelle 3 in Kontakt gerät, was zu einer Verschmutzung der optischen Elemente und damit zu einer Beeinträchtigung des Messergebnisses führen könnte.

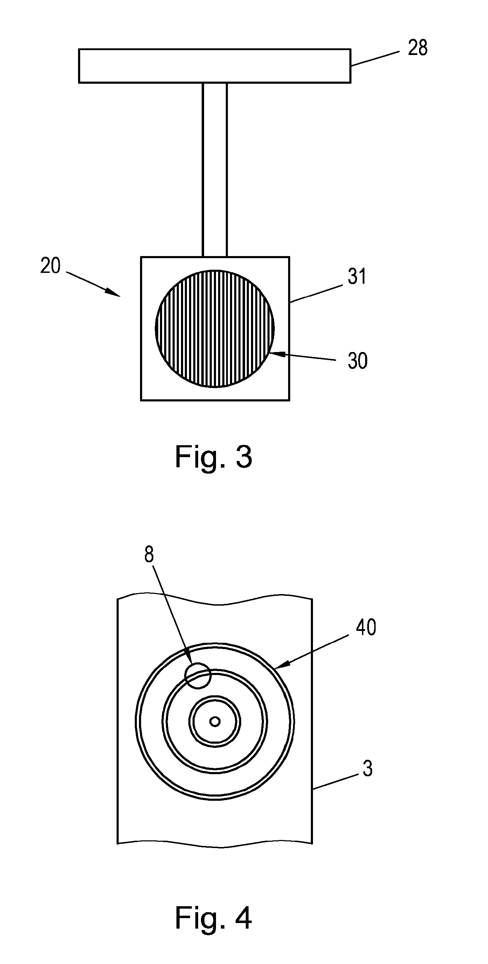

In der Messkammer 3 kann weiters ein erfindungsgemäßes Kalibrierelement 20 vorgesehen sein, das an einem Haltelement 28 angeordnet sein kann, um das Kalibrierelement 20 zu halten und in die Messkammer 3 einführen zu können. Dieses Kalibrierelement 20 ist bedarfsweise mittels einer hier nicht dargestellten Vorrichtung entlang des Pfeiles 10 in die Messkammer 3 und in den Strahlgang des Lichtstrahles 25 der Lichtquelle 6 einbringbar, womit das Streulichtmessgerät 1 mittels der durch das Kalibrierelement 20 erzeugten definierten Lichtverteilung kalibrierbar ist. Das Kalibrierelement 20 wird nachfolgend unter Bezugnahme auf die Fig. 3 beschrieben.

Das Kalibrierelement 20 ist in Form eines optischen Beugungselements 30 ausgebildet, d.h. die Erzeugung des Streulichts 26 basiert auf dem physikalischen Prinzip der Beugung. Als optisches Beugungselement 30 denkbar ist z.B. ein Beugungsgitter mit einer Anordnung von Spalten, wie in Fig.3 stark vergrößert angedeutet, ein diffraktives optisches Element oder eine Blende bzw. ein Blendensystem. Eine Blende ist ein optisches Beugungselement 30 mit einer Öffnung, z.B. eine rechteckige oder kreisrunde Öffnung. Ein Beugungsgitter ist ein optisches Beugungselement 30 mit einer Anzahl von Öffnungen, z.B. in Form von periodisch angeordneten Spalten oder Schlitzen. Mit einem diffraktiven optischen Element wird durch die geometrischen oder optischen (z.B. Brechungsindex) Eigenschaften von Mikrostrukturen am oder im Beugungselement 30 das Intensitätsmusters des davon abstrahlenden Lichtstrahles moduliert. Solche optische Beugungselemente 30 sind dabei hinlänglich bekannt, weshalb hier nicht näher darauf eingegangen werden muss.

Bekanntermaßen erzeugt ein solches optisches Beugungselement 30, das auf dem physikalischen Effekt der Beugung von Licht basiert, bei Bestrahlung mit Licht, vorzugsweise mit monochromatischem Licht, wie beispielsweise Laserlicht, in einem bestimmten Abstand zum optischen Beugungselement 30 ein genau definiertes Interferenzmuster 40 (Intensitätsverteilung, Intensitätsmuster), z.B. in Form von konzentrischen Lichtkreisen bei Verwendung einer Blende mit einer kreisrunden Öffnung als Beugungselement 30 und bei Bestrahlung mit monochromatischem Licht, wie in Fig.4 angedeutet. Bei Verwendung von weißem Licht, würde als Interferenzmuster 40 ein farbiges Muster entstehen. Bei Verwendung eines Beugungsgitters in Form eines Einfach- oder Mehrfachspalts und bei Bestrahlung mit einem monochromatischen Licht würde sich z.B. ein Interferenzmuster in Form von parallelen Lichtstreifen ergeben.

Ein Beugungsgitter als optisches Beugungselement 30 kann z.B. als Transmissionsgitter oder Reflexionsgitter ausgeführt und erzeugt ein Interferenzmuster 40, das nur von den geometrischen Eigenschaften, wie Abstand der Spalten (Gitterkonstante), Anzahl der beleuchteten Spalte und Orientierung zum Lichtstrahl, und von der Wellenlänge des Lichtes abhängt, weshalb sich Beugungsgitter ganz besonders gut für die Verwendung als Kalibrierelement 20 eignen.

Die Ermittlung der mit einem optischen Beugungselement 30 erzeugten Interferenzmuster 40 ist hinlänglich bekannt, bzw. sind die Interferenzmuster 40 bestimmter optischer Beugungselemente 30 bekannt, weshalb hier nicht näher darauf eingegangen wird.

Das in der Messkammer 3 entstehende Interferenzmuster 40, bzw. Teile davon, kann dann mit der/den Detektoranordnung(en) 8, 8' erfasst und ausgewertet werden. Nachdem das Interferenzmuster 40 bekannt ist, kann ein solches optisches Beugungselement 30 zur Kalibrierung des Streulichtmessgerätes 1 herangezogen werden.

Das optische Beugungselement 30 ist vorzugsweise in einem Beugungselementhalter 31 angeordnet, der zur Kalibrierung in der Messkammer 3 an einer vorgegebenen Stelle und Lage (vorzugsweise im rechten Winkel zum eingestrahlten Licht) positioniert wird, z.B. mittels des Halteelementes 28.

Durch die Verwendung von unterschiedlichen Kalibrierelementen 20, oder unterschiedlichen Positionen des Kalibrierelements 20 in der Messkammer 3, lässt sich auf einfache Weise auch eine Mehrpunktkalibrierung realisieren.

## Patentansprüche

1. Kalibrierelement mit einem optischen Beugungselement (30), das durch Bestrahlung mit einem Lichtstrahl (25) ein definiertes Interferenzmuster (40) erzeugt.

2. Kalibrierelement nach Anspruch 1, **dadurch gekennzeichnet, dass** das optische Beugungselement (30) als Beugungsgitter ausgeführt ist.

3. Kalibrierelement nach Anspruch 1, **dadurch gekennzeichnet, dass** das optische Beugungselement (30) als diffraktives optisches Element ausgeführt ist.

4. Kalibrierelement nach Anspruch 1, **dadurch gekennzeichnet, dass** das optische Beugungselement (30) als Blende oder Blendensystem ausgeführt ist.

5. Kalibrierelement nach einem der Ansprüche 1 bis 4, **dadurch gekennzeichnet, dass** das optische Beugungselement (30) auf einem Beugungselementhalter (31) angeordnet ist.

6. Streulichtmessgerät mit einer Messkammer (3), in der ein Kalibrierelement (20) mit einem optischen Beugungselement (30) nach einem der Ansprüche 1 bis 5 in definierter Position und Lage angeordnet ist, mit einer Detektoranordnung (8, 8') und mit einer Lichtquelle (6), die einen Lichtstrahl (25) in die Messkammer (3) einstrahlt, wobei der Lichtstrahl (25) das optische Beugungselement (30) des Kalibrierlements (20) zur Kalibrierung des Streulichtmessgerätes (1) anstrahlt, um ein definiertes Interferenzmuster (40) zu erzeugen, und die Detektoranordnung (8, 8') zur Erfassung des Interferenzmusters (40) vorgesehen ist.
